## Europäisches Patentamt

## European Patent Office

## Office européen des brevets

(11) Veröffentlichungsnummer: **0 155 538**
**A1**

## EUROPÄISCHE PATENTANMELDUNG

(21) Anmeldenummer: **85102002.4**

(22) Anmeldetag: **23.02.85**

(51) Int. Cl.⁴: **F 02 M 21/02**

(30) Priorität: 28.02.84 DE 3407119
02.02.85 DE 3503593

(43) Veröffentlichungstag der Anmeldung:
25.09.85 Patentblatt 85/39

(84) Benannte Vertragsstaaten:
AT BE CH DE FR GB IT LI LU NL SE

(71) Anmelder: Karl Hopt GmbH Elektrotechnische Fabrik

D-7464 Schömberg-2 Schörzingen(DE)

(72) Erfinder: Hopt, Erwin
Birkenweg
D-7464 Schömberg 2(DE)

(74) Vertreter: Patentanwälte Kohler - Schwindling - Späth
Hohentwielstrasse 41
D-7000 Stuttgart 1(DE)

(54) **Einrichtung zum Betreiben eines Kraftfahrzeuges mit gasförmigem Treibstoff.**

(57) Eine Einrichtung dient zum Betreiben eines Kraftfahrzeuges mit gasförmigem Treibstoff. Gas in der flüssigen Phase wird einem Flüssiggastank (10) entnommen, einem Verdampfer/Druckregler (13) zugeführt und über einen Gasdosierer (15) in ein Saugrohr (17) des Kraftfahrzeuges geleitet.

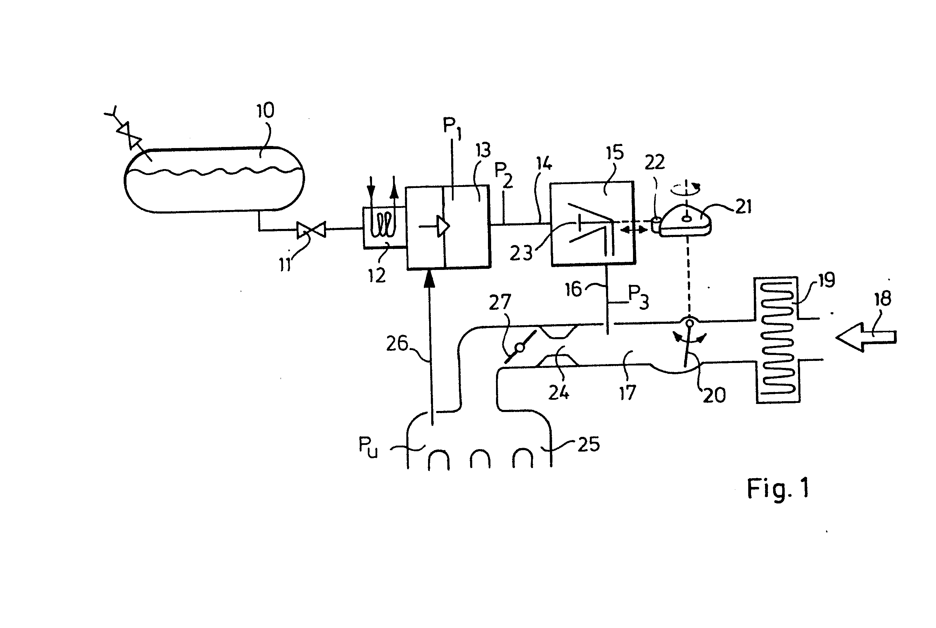

Um den Druck in allen Betriebsarten optimal an den Bedarf des Verbrennungsmotors anzupassen, gleichzeitig aber den Verbrauch und die Schadstoffe im Abgas gering zu halten, wird das Gas unter Überdruck ($P_3$) in das Saugrohr (17) geleitet, und der Druckregler (13) ist mit Mitteln versehen, die in Abhängigkeit vom Unterdruck ($P_u$) im motorseitigen Saugrohr (17) den Überdruck ($P_3$) gegenläufig zum Unterdruck ($P_u$) einstellen (Fig. 1).

Fig. 1

Croydon Printing Company Ltd.

- 1 -

**Anmelderin:**

Karl Hopt GmbH
Elektrotechnische Fabrik
7464 Schömberg 2 - Schörzingen

Stuttgart, 21. 2. 1985
P 4635 EP W/Ho

**Vertreter:**

Kohler - Schwindling - Späth
Patentanwälte
Hohentwielstraße 41
7000 Stuttgart 1

## Einrichtung zum Betreiben eines Kraftfahrzeuges mit gasförmigem Treibstoff

Die Erfindung betrifft eine Einrichtung zum Betreiben eines Kraftfahrzeuges mit gasförmigem Treibstoff, bei der einem Flüssiggastank Gas in der flüssigen Phase entnommen, einem Verdampfer/Druckregler zugeführt und über einen Gasdosierer in ein Saugrohr des Kraftfahrzeuges geleitet wird.

Aus der DE-OS 23 23 050 ist eine Regeleinrichtung für eine Flüssiggasanlage für Verbrennungsmotoren bekannt, bei der Flüssiggas aus einem Tank entnommen und verdampft wird. Der etwa unter atmosphärischem Druck stehende gasförmige Treibstoff wird nach Durchlaufen eines Druckreglers über eine seitliche Öffnung einem Saugrohr des Verbrennungsmotors zugeführt. Das Saugrohr ist im Bereich der Öffnung verengt ausgebildet, so daß der gasförmige Treibstoff aufgrund des Venturi-Effektes in das Saugrohr stromaufwärts von der Drosselklappe eingesaugt wird.

Dieses "Ansaugen" des gasförmigen Treibstoffs hat den Nachteil, daß Regeleingriffe, die eine bessere Ausnutzung der Motorleistung und/oder eine Verminderung der Schadstoffe im Abgas ermöglichen, nicht oder nur mit großen Schwierigkeiten zu erzielen sind, sofern überhaupt mehrere Forderungen gleichzeitig realisiert werden können.

Der Erfindung liegt daher die Aufgabe zugrunde, eine Einrichtung der eingangs genannten Art dahingehend weiterzubilden, daß für die verschiedenen Betriebsfälle des Kraftfahrzeuges, insbesondere im Schub-, Leerlauf- und Vollastbetrieb, die jeweils gewünschte Leistung optimal eingestellt werden kann, gleichzeitig aber der Treibstoffverbrauch wie auch die Schadstoffe im Abgas minimal gehalten werden.

Diese Aufgabe wird erfindungsgemäß dadurch gelöst, daß das Gas unter Überdruck in das Saugrohr geleitet wird und daß der Druckregler mit Mitteln versehen ist, die in Abhängigkeit vom Unterdruck im motorseitigen Saugrohr den Überdruck gegenläufig zum Unterdruck einstellen.

Die der Erfindung zugrundeliegende Aufgabe wird damit vollkommen gelöst, weil es ausgehend von einem Überdruck einfacher ist, die Treibstoffzufuhr abzusenken, wie dies im Schubbetrieb gewünscht wird, und andererseits den Überdruck anzuheben, wie dies zur Vollastanreicherung wünschenswert ist.

Es läßt sich somit eine optimale Regelung für alle Betriebsfälle erzielen, wobei im Schubbetrieb eine vollständige Unterbrechung der Treibstoffzufuhr möglich ist, so daß Verbrauch und Schadstoffanteil des Abgases zu Null werden, ferner im Leerlaufbetrieb ein endlicher Wert für den Überdruck zur Regelung herangezogen werden kann, um eine Leerlaufregelung durchzuführen und schließlich im Vollastfall durch gezielte Anreicherung das Gemisch gerade so angefettet werden kann, daß einerseits zwar die volle Motorleistung mobilisiert wird, andererseits aber die Schadstoffe auf einem begrenzten Wert bleiben.

Bei Ausführungsbeispielen der Erfindung führt im Schubbetrieb ein hoher Unterdruck von beispielsweise 0,9 bar zu einem Überdruck nahe Null von beispielsweise 0 bar, im Leerlaufbetrieb ein mittlerer Unterdruck von beispielsweise 0,6 bar zu einem niedrigen Überdruck von beispielsweise 0,25 bar und schließlich im Vollastbetrieb ein niedriger Unterdruck von beispielsweise 0,05 bar zu einem hohen Überdruck von beispielsweise 0,35 bar.

Eine besonders gute Wirkung wird in weiterer Ausgestaltung der Erfindung dadurch erzielt, daß der Überdruck in Abhängigkeit von der das Saugrohr durchsetzenden Luftmenge

0155538

gesteuert und hierzu überlagert in Abhängigkeit von im motorseitigen Saugrohr herrschenden Unterdruck geregelt wird.

Diese Steuerung des Überdrucks mit überlagerter Unterdruck-Regelung hat den Vorteil, daß Schubabschaltung bzw. Vollastanreicherung wirklich nur dann wirksam werden, wenn dies nach dem tatsächlichen Betrieb des Kraftfahrzeuges erforderlich ist. Im normalen Fahrbetrieb außerhalb dieser Grenzwerte wird hingegen der Kraftstoff luftmengenabhängig zugemessen, so daß sich ein optimaler Verbrauch in allen Betriebslagen ergibt.

Bei einer Variante dieser Ausführungsform ist im Saugrohr, zwischen Luftfilter und Vergaser, eine Stauklappe angeordnet, deren Auslenkung auf den Gasdosierer übertragen wird und den Überdruck gesteuert einstellt.

Zweckmäßigerweise ist bei dieser Variante an das Saugrohr, im Bereich des motorseitigen Krümmers, eine Unterdruckleitung angeschlossen, die zum Druckregler führt und dort mit einem Regelraum in Verbindung steht, an den eine Membran grenzt, deren Auslenkung den Ausgangsdruck des Druckreglers bestimmt.

Die vorstehend genannten gegenständlichen Maßnahmen ermöglichen die weiter oben genannte Steuerung mit überlagerter Regelung durch besonders einfache und wirkungsvolle Mittel, die jeweils als Komponenten bereits in der Motortechnik bekannt und bewährt sind. Es läßt sich demnach eine erfindungsgemäße Einrichtung mit besonders zuverlässigen und langzeitstabilen Elementen aufbauen.

Bei einer erfinderischen Ausgestaltung des Druckreglers betätigt die Membran ein Ventil für das den Druckregler durchströmende Gas, und die Membran ist auf ihrer einen Seite vom Druck des in den Druckregler strömenden Gases und auf der anderen Seite vom Unterdruck und einer Vorspannkraft beaufschlagt.

Auch diese Maßnahmen führen zu einem besonders einfachen und betriebssicheren Aufbau, weil durch die genannte Differenz der Drücke bzw. der Vorspannkraft eine selbsttätige Regelung des Druckes am Ausgang des Druckreglers auftritt, so daß dem Gasdosierer bereits ein "voreingestellter" Druck zugeführt wird, der in den weiter oben genannten besonderen Betriebsfällen abgesenkt bzw. angehoben ist.

Der Unterdruck kann bei einer Variante dieses Ausführungsbeispiels untersetzt auf die Membran einwirken, um je nach gegebenen Betriebsbedingungen eine nur geringfügige Überlagerung der Steuerung zu erreichen.

Bei einer anderen Variante des Druckreglers ist hinter einer aus Membran und Ventil gebildeten ersten Stufe des Druckreglers eine zweite, aus einer zweiten Membran und einem zweiten Ventil gebildete Stufe vorgesehen, wobei der Unterdruck untersetzt auf die zweite Membran wirkt.

Diese Maßnahme hat den ganz besonderen Vorteil, daß die beiden Betriebsfälle "Schubbetrieb" einerseits und "Vollastbetrieb" andererseits voneinander unabhängig in den beiden Stufen des Druckreglers berücksichtigt werden. Die erste, vollwirksame Stufe dient dabei im wesentlichen zum Einstellen eines Normaldrucks im Leerlauf- und Teillastbetrieb sowie zum Unterbrechen der Treibstoffzufuhr im Schubbetrieb, während die untersetzt wirkende zweite Stufe zur Vollastanreicherung dient und damit dem Motor im Vollastbetrieb nur so viel mehr an Treibstoff zukommen läßt, wie dies gerade noch zu einer Leistungserhöhung, nicht jedoch zu einer merklichen Schadstoffvermehrung im Abgas führt. Die beiden überlagerten Eingriffe im Schubbetrieb und Vollastbetrieb lassen sich durch die beiden Stufen auch unabhängig voneinander einstellen, so daß der zweistufige Druckregler besonders gut geeignet ist, um an unterschiedlichste Motoren angepaßt zu werden.

Bei einer Variante dieses Ausführungsbeispiels mit erster und zweiter Stufe des Druckreglers ist vorgesehen, daß die erste Stufe mit der zweiten Stufe zusammenwirkt, derart, daß bei Schließen des ersten Ventils das zweite Ventil ebenfalls geschlossen wird.

Diese Maßnahme hat den besonderen Vorteil, daß im Schubfall, wenn das erste Ventil geschlossen und damit die Gaszufuhr im Bereich des ersten Ventils unterbrochen wird, das zweite Ventil ebenfalls zwangsweise mit schließt und dadurch auch die im Druckreglergehäuse noch enthaltenen Restmengen an Gas nicht mehr in den Motor gelangen. Auf diese Weise ergibt sich eine Erhöhung der Ersparnis im Schubfall und außerdem wird auch die Abgasqualität verbessert.

Praktisch kann diese Variante bevorzugt dadurch realisiert werden, daß ein Ventilkörper des zweiten Ventils mit mindestens einer Stange versehen ist, die an der ersten Membran in deren Öffnungsrichtung lose anliegt.

0155538

Diese Maßnahme hat den Vorteil, daß die angestrebte Zusammenwirkung der beiden Stufen besonders einfach bewerkstelligt wird, weil die das erste Ventil schließende Membran durch Verschieben der Stange den Ventilkörper des zweiten Ventils zwangssteuert, während bei einer Öffnungsbewegung der ersten Membran durch die lose Anlage der Stange in dieser Richtung keine Wechselwirkung eintritt.

Sind der Ventilkörper und die erste Membran rotationssymmetrisch ausgebildet, ist in einer Weiterbildung dieser Variante vorgesehen, daß drei Stangen über einen Umfang verteilt vorgesehen sind.

Diese Maßnahme hat den Vorteil, daß ein Verkanten der Stangen sicher vermieden wird.

Weiterhin ist bevorzugt, eine der vorstehend genannten Varianten mit einer Wechselwirkung der beiden Stufen untereinander so auszubilden, daß das zweite Ventil eine lose an der zweiten Membran in deren Schließrichtung anliegende weitere Stange aufweist, die gleitend im Ventilkörper geführt und an diesem über eine Druckfeder abgestützt ist, daß ferner der Ventilkörper seinerseits in einem Kolbenteil gleitend geführt ist, an dem die weitere Stange befestigt ist und der sich über eine weitere Druckfeder an einer Wand des Gehäuses des Druckreglers abstützt.

Diese letztgenannten Maßnahmen haben den Vorteil, daß zum einen eine definierte Lage des Ventilkörpers des zweiten Ventils auch dann erreicht wird, wenn die erste Membran von der zunächst an ihr anliegenden Stange abhebt, weil dann die

0155538

weitere Druckfeder das Kolbenteil und die damit sta-r verbundene Stange des zweiten Ventils gegen die zweite Membran drückt.

Bei Varianten der Ausführungsbeispiele mit untersetzt wirkendem Unterdruck kann der Unterdruck entweder nur auf eine Teilfläche der Membran wirken oder aber vor dem Wirksamwerden auf der Membranfläche durch eine Öffnung im Gehäuse des Druckreglers geschwächt werden.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1     eine gesamthafte Schemazeichnung eines Ausführungsbeispiels einer erfindungsgemäßen Einrichtung;

Fig. 2     eine Detaildarstellung, teilweise im Schnitt in zwei Ebenen, eines Gasdosierers;

Fig. 3     eine Schnittdarstellung eines ersten Ausführungsbeispiels eines erfindungsgemäßen Druckreglers;

Fig. 4     eine Variante des in Fig. 3 dargestellten Ausführungsbeispiels;

0155538

Fig. 5        eine Schnittzeichnung durch ein weiteres Ausfüh-
              rungsbeispiel eines erfindungsgemäßen Druck-
              reglers mit zwei Stufen;

Fig. 6        eine Schemadarstellung des Ausführungsbeispiels
              gemäß Fig. 5 zur Erläuterung von dessen Wirkungsweise;

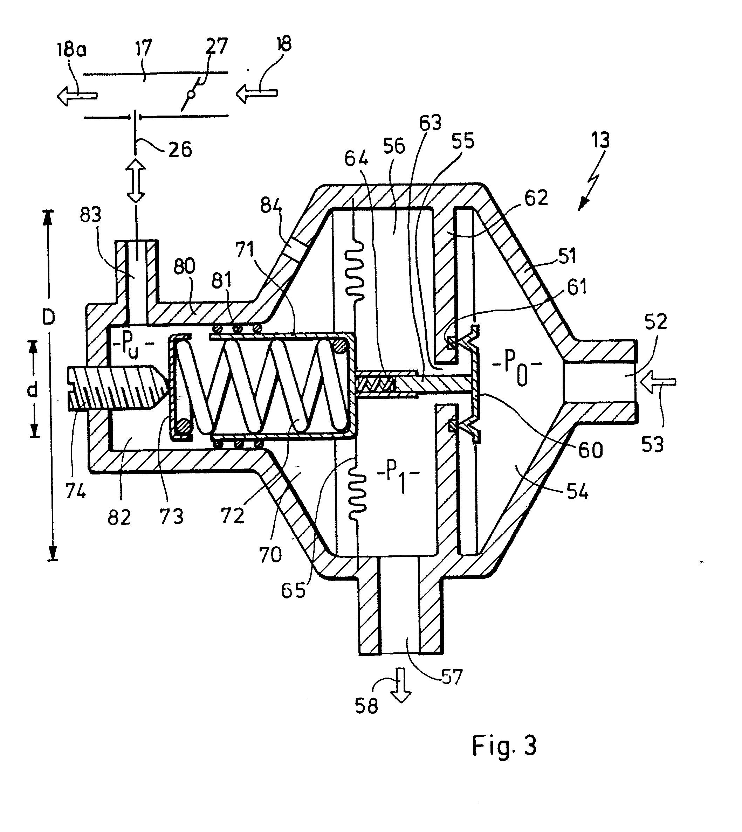

Fig. 7 und 8
              zwei Zeitdiagramme von Drücken zur weiteren
              Erläuterung der Wirkungsweise der Ausführungsbeispiele gemäß Fig. 3 bis 5;

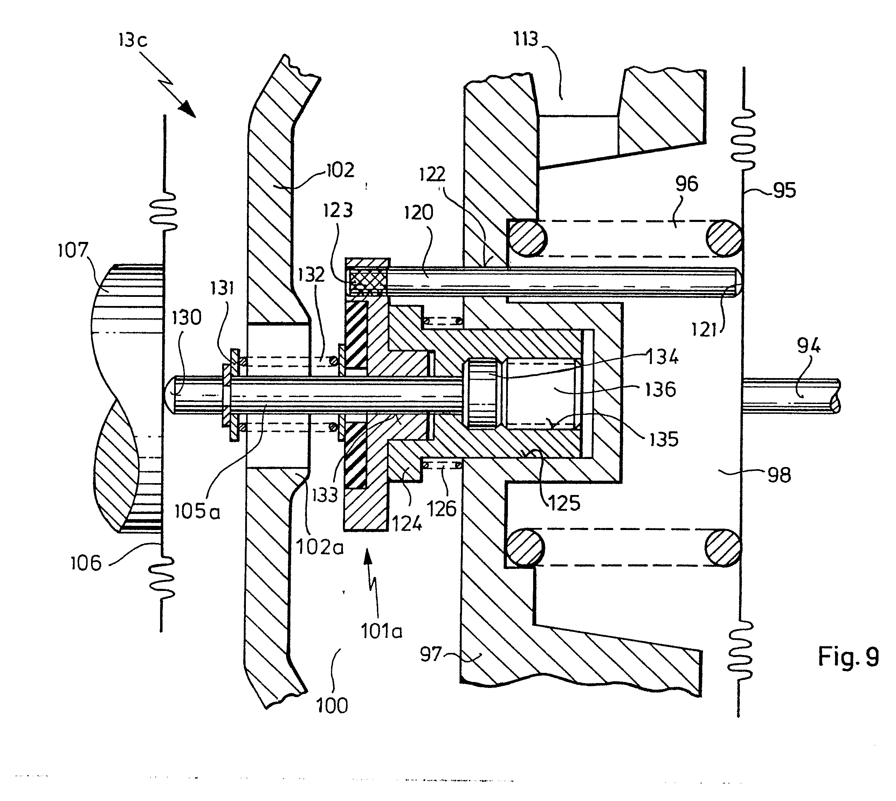

Fig. 9        in vergrößertem Maßstab einen Ausschnitt aus

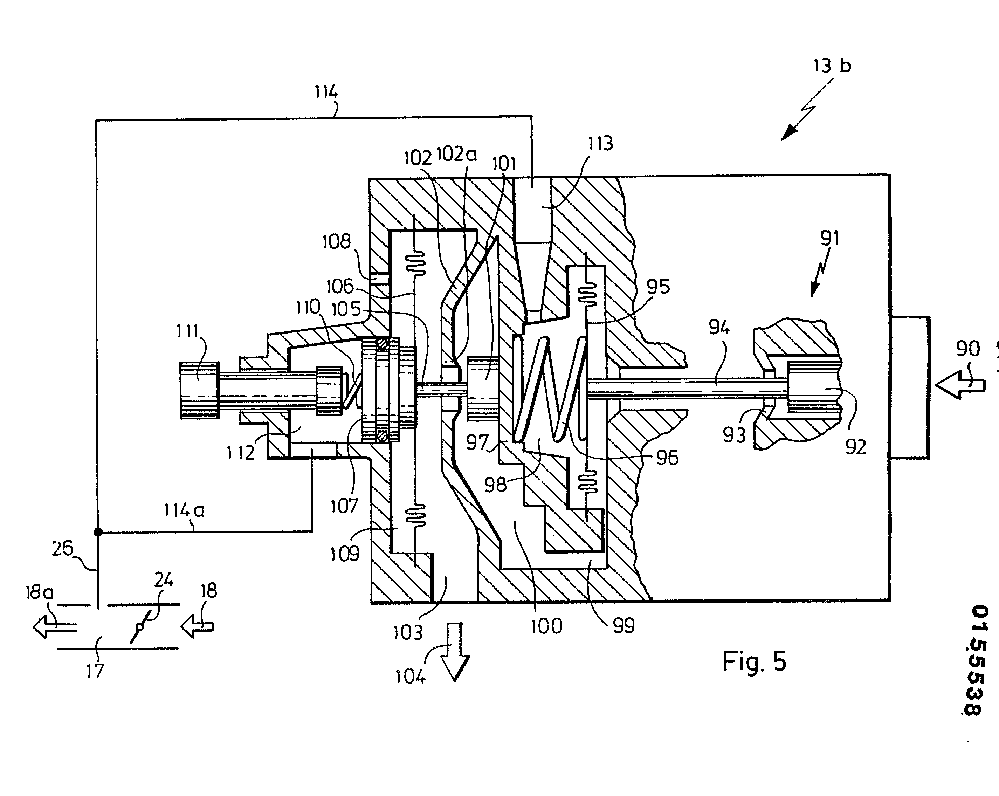

              Fig. 5, jedoch für ein abgewandeltes
              Ausführungsbeispiel.

Bei der Darstellung gemäß Fig. 1 ist 10 ein Flüssiggastank
in einem Kraftfahrzeug, von dem Gas in der flüssigen Phase
über ein Magnetventil 11 und einen Wärmetauscher 12 auf
einen Druckregler 13 gelangt. Der Wärmetauscher 12 ist in
der Regel mit dem gleichzeitig als Verdampfer dienenden
Druckregler 13 einstückig ausgebildet, um die Verdampfungskälte zu kompensieren.

Im Druckregler 13 herrscht ein interner Regeldruck $P_1$ und
am Ausgang ein Druck $P_2$ der gasförmige Phase, wie dies
weiter unten noch erläutert wird.

Der Ausgang des Druckreglers 13 steht über eine Niederdruckleitung 14 mit einem Gasdosierer 15 in Verbindung, von dem
wiederum eine Leitung 16 zu einem Saugrohr 17 führt, das von einem Luftstrom 18 durchsetzt wird. Die Leitung 16 mündet in das Saugrohr 17 in einem Bereich zwischen einem Luftfilter 19 und einem Vergaser 24. Zwischen der Mündung der Leitung 16 und dem Luftfilter 19 befindet sich eine Stauklappe 20, deren Drehung auf eine Nockenscheibe 21 übertragen wird, auf deren Kontur eine Rolle 22 läuft, die wiederum ein Kegelventil 23 des Gasdosierers 15 betätigt.

Hinter dem Vergaser 24 befindet sich eine Drosselklappe 27, und von da aus geht das Saugrohr 17 in einen motorseitigen Krümmer 25 über. Im Bereich des Krümmers 25 ist das Saugrohr 17 über eine Unterdruckleitung 26 mit dem Druckregler 13 verbunden.

Die Wirkungsweise der in Fig. 1 dargestellten Einrichtung ist wie folgt:

Nach Öffnen des Magnetventils 11 strömt Treibstoff in der flüssigen Phase über den Wärmetauscher 12 in den Druckregler 13, verdampft und wird auf einen konstanten Ausgangsdruck $P_2$ eingestellt. Der Druck $P_2$ ist der Eingangsdruck des Gasdosierers 15. Bei teilweise geöffneter Drosselklappe 27 wird die Stauklappe 20 durch den Luftstrom 18 teilweise geöffnet und über eine Verdrehung der Nockenscheibe 21 und eine Verschiebung der Rolle 22 das Kegelventil 23 etwas geöffnet. Es strömt nun über die Leitungen 14, 16 Gas mit einem Überdruck $P_3$ in das Saugrohr 17 und gelangt nach Durchlaufen des Vergasers 24 und an der Drosselklappe 27 vorbeiströmend in den Bereich des Krümmers 25 und damit in die Brennräume. Je nach Öffnungsgrad der Drosselklappe 27 wird demzufolge mehr oder weniger gasförmiger Treibstoff zugeführt, wie dies der Luftmenge im Saugrohr 17 entspricht.

Rollt das Kraftfahrzeug bei geschlossener Drosselklappe 27 einen Berg hinab, herrscht im Bereich des Krümmers 25 ein erheblicher Unterdruck, der über die Unterdruckleitung 26 zum Druckregler 13 übertragen wird. In weiter unten noch dargestellter Weise schließt hierdurch im Druckregler 13 ein Ventil, und der Ausgangsdruck $P_2$ wird zu Null, so daß unabhängig von der Stellung des Gasdosierers 15 kein Gas in das Saugrohr 17 strömen kann.

Ist hingegen im Vollastbetrieb die Drosselklappe 27 vollkommen geöffnet, herrscht ein nur sehr geringer Unterdruck im Bereich des Krümmers 25, der ebenfalls über die Unterdruckleitung 26 zum Druckregler 13 übertragen wird und dort in weiter unten noch geschilderter Weise bewirkt, daß der Ausgangsdruck $P_2$ des Druckreglers 13 angehoben wird. Zusätzlich zur geöffneten Stellung des Gasdosierers 15 in Vollastbetrieb wird auf diese Weise durch Erhöhung des Drucks $P_2$ und damit auch des Drucks $P_3$ eine zusätzliche Menge Gas in das Saugrohr 17 geleitet und damit das Gemisch angereichert.

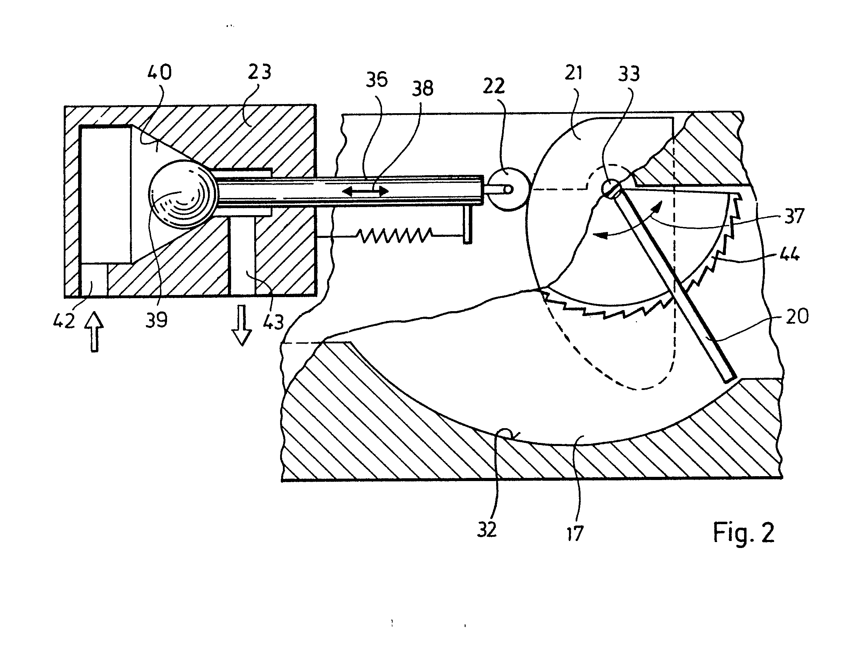

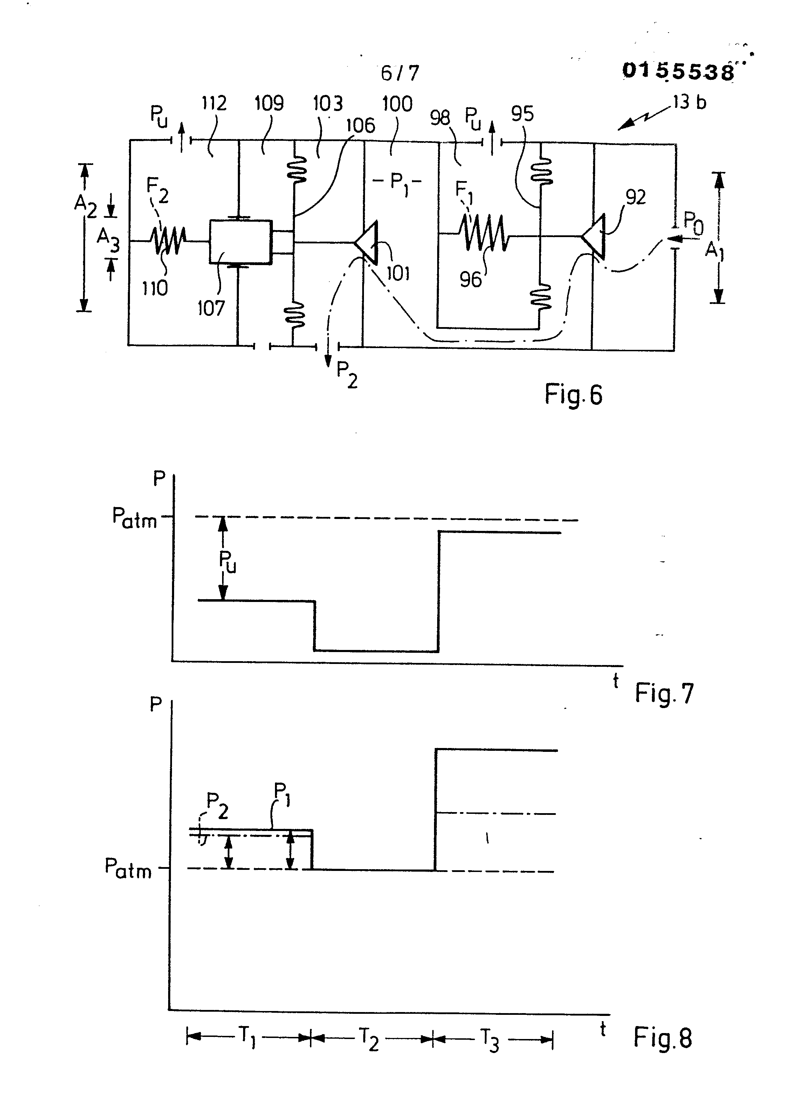

Es sollen nun die Komponenten "Druckdosierer 15" anhand von Fig. 2 sowie mehrere Ausführungsbeispiele der Komponente "Druckregler 13" anhand der Fig. 3 bis 5 sowie deren Wirkungsweise anhand der Fig. 6 bis 8 näher veranschaulicht werden:

In Fig. 2 ist mit 17 wiederum das Saugrohr bezeichnet. Im Saugrohr 17 ist die Stauklappe 20 angeordnet, deren freies Ende sich entlang einer Bahn bewegt, die einen bei Auslenkung der Stauklappe 20 zunehmenden Abstand von einer Kontur 32 an der Innenseite des Saugrohrs 17 aufweist, wie dies an sich bekannt ist.

Die Stauklappe 20 ist um eine Achse 33 drehbar angeordnet und wird gegen die Kraft einer in Fig. 2 nicht dargestellten Spiralfeder ausgelenkt. Am oberen Ende der Achse 33 ist die Kurvenscheibe 21 befestigt, die sich mit der Stauklappe 20 dreht. Am Umfang der Kurvenscheibe 21 läuft die Rolle 22, die an einer Stange 36 angelenkt ist. Dreht sich die Stauklappe 20 mit der Kurvenscheibe 21 in Richtung eines Doppelpfeiles 37, verschiebt sich die Stange 36 axial in Richtung eines Pfeiles 38.

An dem von der Rolle 22 abgewandten Ende ist die Stange 36 mit einer Kugel 39 versehen, die mit einem kegeligen Ventilsitz 40 zusammenarbeitet und dadurch das Ventil 23 bildet. Das Ventil 23 dient zum Dosieren des verdampften Flüssiggases zwischen einer Zuströmöffnung 42 und einer Abströmöffnung 43 des Ventils 23.

Die Zuströmöffnung 42 ist mit dem Verdampfer/Druckregler 13 und die Abströmöffnung 43 mit dem Saugrohr 17, stromaufwärts vom Vergaser 24, verbunden.

Die Stauklappe 20 wird nur in der Betriebsart des Kraftfahrzeuges benötigt, in der dieses mit Flüssiggas angetrieben wird. Wird das Kraftfahrzeug hingegen mit Benzin angetrieben, wird die Stauklappe 20 zwar ebenfalls durch den das

0155538

Saugrohr 17 durchsetzenden Luftstrom ausgelenkt, die Bewegung der Stauklappe 20 wird jedoch in dieser Betriebsweise nicht benötigt.

Obwohl die Stauklappe 11 verhältnismäßig leichtgängig ist, und dem das Saugrohr 10 durchsetzenden Luftstrom keinen nennenswerten Widerstand entgegensetzt, ist zur Beseitigung auch dieser geringfügigen Verluste in der Betriebsart "Benzin" erfindungsgemäß vorgesehen, die Stauklappe 20 in dieser Betriebsart in der Offenstellung zu verrasten. Hierzu kann eine sich mit der Stauklappe 20 drehende Zahnscheibe 44 vorgesehen sein, die in der Betriebsart "Benzin" in der vollkommen geöffneten Stellung mittels einer in Fig. 2 nicht dargestellten Klinke verrastet wird. Es versteht sich jedoch, daß auch andere Arten von Verrastungen pneumatischer, mechanischer oder elektromechanischer, z.B. magnetischer Art verwendet werden können, die mit mechanischen oder elektronischen Schnapp- bzw. Halteelementen arbeiten.

In Fig. 3 ist mit 13 gesamthaft ein Ausführungsbeispiel eines Druckreglers bezeichnet, der sich innerhalb eines Gehäuses 51 befindet. An der einen Seite des Gehäuses 51 ist ein Einlaßstutzen 52 für die gasförmige Phase des Flüssiggases, die nachfolgend einheitlich als "Gas" 53 bezeichnet wird, vorgesehen. Der Einlaßstutzen 52 führt zu einem Vorraum 54 im Gehäuse 51. Vom Vorraum 54 führt eine Öffnung 55 zu einem Hauptraum 56, von dem ein Auslaßstutzen 57 das Gas 53 zum in Fig. 3 nicht dargestellten Verbrennungsmotor führt.

Die Öffnung 55 ist mit einem Schließkörper 60 verschließbar, der auf einer Dichtung 61 in einer Trennwand 62 aufliegt,

0155538

die den Vorraum 54 vom Hauptraum 56 trennt. Zum Betätigen des Schließkörpers 60 ist eine Stange 63 vorgesehen, die sich über eine erste Feder 64 elastisch auf einer Membran 65 abstützt.

Die Membran 65 trennt den Hauptraum 56 von einem ersten Regelraum 70. Im ersten Regelraum 70 ist eine becherförmige Hülse 71 angeordnet, die eine zweite Feder 72 umschließt. Die Stirnfläche der Hülse 71 liegt zusammen mit einem Ende der zweiten Feder 72 an der von der ersten Feder 64 abgewandten Oberfläche der Membran 65 an. Das andere Ende der zweiten Feder 72 ist mit einem Deckel 73 versehen, der sich auf einer Einstellschraube 74 abstützt. Die Einstellschraube 74 läuft in einer Gewindebohrung eines halsförmigen Ansatzes 80 des Gehäuses 51, der auch die becherförmige Hülse 71 samt zweiter Feder 72 zylindrisch umschließt. Zwischen Hülse 71 und halsförmigem Ansatz 80 ist eine Gleitdichtung 81, beispielsweise in Gestalt von O-Ringen, angeordnet. Die Hülse 71 mit der Gleitdichtung 81 trennt demzufolge den ersten Regelraum 70 von einem zweiten Regelraum 82 ab, der durch den halsförmigen Ansatz 80 umschlossen wird.

An den halsförmigen Ansatz 80 ist ein Regelstutzen 83 angeformt, der über die Leitung 26 mit dem Saugrohr 17 des nicht dargestellten Verbrennungsmotors in Verbindung steht, und zwar unterhalb des Vergasers 24, in Strömungsrichtung gesehen.

Der effektive Durchmesser der Membran 65 ist in Fig. 3 mit D, der effektive Durchmesser der Stirnfläche der Hülse 71 ist mit d bezeichnet.

Der Druck im Vorraum 54 ist mit $P_0$, der Druck im Hauptraum 56 mit $P_1$ bezeichnet. Im ersten Regelraum 70 herrscht aufgrund einer Bohrung 84 im Gehäuse 51 der Außendruck $P_A$, während im zweiten Regelraum 82 über die Leitung 26 der Unterdruck $P_u$ des Saugrohres 17 herrscht.

Die Wirkungsweise des Druckreglers 13 gemäß Fig. 2 ist wie folgt:

Das in den Einlaßstutzen 52 einströmende Gas 53 steht unter dem Druck $P_0$. Durch Einstellen der Einstellschraube 74 in Verbindung mit den Kräften der ersten Feder 64 und der zweiten Feder 72 sowie den Kennwerten der Membran 65 sowie der effektiven Querschnittsfläche des Schließkörpers 60 stellt sich ein Druckgefälle $P_0 - P_1$ ein. $P_1$ ist auch der Druck des vom Auslaßstutzen 57 abströmenden Gases 58.

Erhöht sich nun der Druck $P_1$ im Hauptraum 56 in unerwünschter Weise, wird die Membran 65 in Fig. 3 nach links ausgelenkt und damit der Schließkörpr 60 näher an die Dichtung 61 heranbewegt. Es strömt demzufolge weniger Gas in den Hauptraum 56, und der Druck $P_1$ nimmt wieder ab.

Man erkennt, daß bei einmal eingestelltem Soll-Druck die Anordnung den Druck $P_1$ konstant hält.

Bei einem praktischen Ausführungsbeispiel hat der Wert $P_1$ einen Wert von 0,5 bar ($5 \times 10^{-4}$ Pa), was bei einer Fläche der Membran 65 von beispielsweise 50 cm$^2$ einer Kraft der zweiten Feder 72 von ca. 25 kp (245 N) entspricht.

Aufgrund der Bohrung 84 kann sich, wenn man zunächst einmal die Wirkung des zweiten Regelraumes 82 außer Betracht läßt, die Membran 65 frei bewegen und damit die oben beschriebene Regelung für den Druck $P_1$ ausführen.

Beaufschlagt man nun jedoch den zweiten Regelraum 82 mit dem Unterdruck $P_2$ des Saugrohres 17, wird dieser Unterdruck $P_2$ über die wirksame Stirnfläche der Hülse 71 in eine Kraft umgesetzt, die sich auf die Rückseite der Membran 65 (vom Hauptraum 56 aus gesehen) auswirkt.

Man kann nun das Verhältnis des Durchmessers D der Membran 65 zum Durchmesser d der Stirnfläche der Hülse 71 beispielsweise so auslegen, daß die wirksamen Flächen sich wie 5:1 verhalten. Bei einem Druck von beispielsweise 0,5 bar ($5 \times 10^{-4}$Pa) im Saugrohr 17 ergibt sich damit eine über die Hülse 71 zusätzlich auf die Membran 65 ausgeübte Kraft von 5 kp (49 N). Dies bedeutet, daß der Druck $P_1$, ausgehend von einem Druck von 0,5 bar ($5 \times 10^{-4}$Pa) in einem Bereich von ± 0,1 bar ($10^{-4}$Pa) zusätzlich überlagert geregelt werden kann.

Wenn der Fahrer sein Fahrzeug aus dem Teillastbereich heraus beschleunigen will und hierzu eine erhöhte Motorleistung anfordert, öffnet sich die Drosselklappe 27, und der bis dahin im Saugrohr 17 vorhandene Unterdruck $P_u$ baut sich ab, d.h. der Absolutwert des Druckes $P_u$ erhöht sich. Durch die zuvor berechnete überlagerte Kraft, die der Druck $P_2$ über die Hülse 71 auf die Membran 65 ausübt, wird diese bei zunehmendem Druck $P_u$ in der Figur nach rechts ausgelenkt, so daß der Schließkörper 60 von der Dichtung 61 abhebt. Dem Motor wird demzufolge ungeachtet der sonstigen Gemischaufbereitung ein höherer Anteil von Kraftstoff zugeführt oder, mit anderen Worten, das Luftverhältnis wird auf einen Wert kleiner als 1 abgesenkt, und infolge des fetteren Gemisches erhöht sich die Motorleistung.

Diese überlagerte Regelung wird jedoch in dem Augenblick wieder aufgehoben, in dem der Fahrer durch Lösen des Fahrpedals die Drosselklappe 27 wieder schließt und sich der Unterdruck im Saugrohr 17 wieder erhöht, d.h. der Absolut-Wert des Druckes $P_u$ vermindert. Die Membran 65 kehrt dann wieder nach links in ihre Ausgangsstellung zurück, und der Schließkörper 60 nähert sich wieder an die Dichtung 61 an, so daß kein Kraftstoffüberschuß mehr vorliegt.

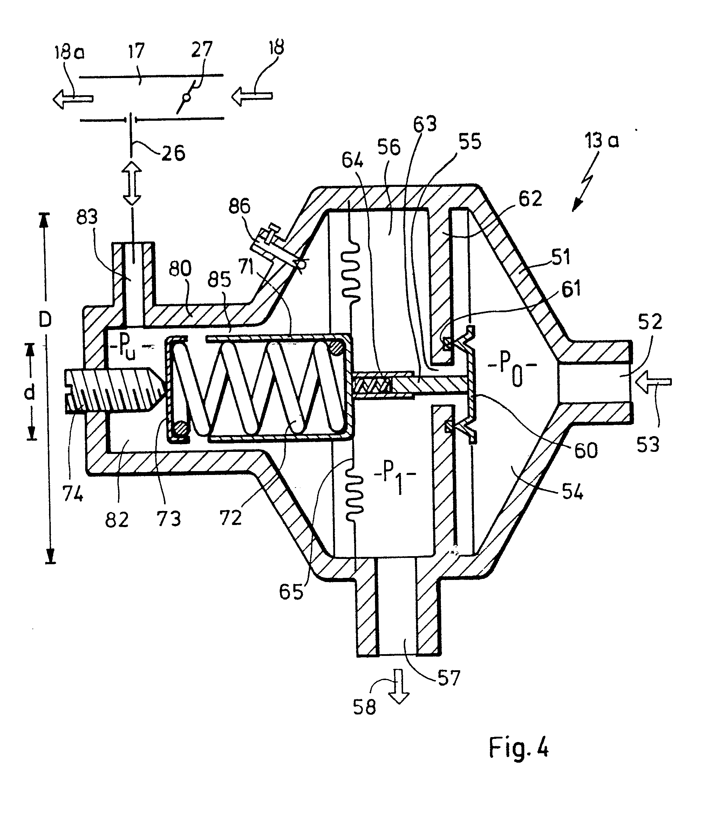

Fig. 4 zeigt als Variante des Ausführungsbeispiels gemäß Fig. 3 einen Druckregler 13a, bei dem die Gleitdichtung 81 zwischen Hülse 71 und Ansatz 80 fehlt, so daß an dieser Stelle ein Durchgang 85 entsteht. Es liegt demzufolge auch keine Trennung mehr zwischen erstem Regelraum 70 und zweitem Regelraum 82 vor, wie dies beim Ausführungsbeispiel gemäß Fig. 3 der Fall war. Weiterhin ist die Öffnung 84 gemäß Fig. 3 beim Ausführungsbeispiel gemäß Fig. 4 als Rückschlagventil 86 einstellbaren Durchflußquerschnitts ausgebildet.

Beim Ausführungsbeispiel gemäß Fig. 4 wirkt der Unterdruck $P_u$ folglich auf die gesamte linke Oberfläche der Membran 65, er ist jedoch deswegen geschwächt, weil über das Rückschlagventil 86 Luft in den Regelraum links von der Membran 65 einströmt, so daß der Unterdruck $P_u$ nur in geringerem Maße auf die Membran 65 einwirkt. Das Ausmaß der Schwächung des Unterdrucks $P_u$ kann über das einstellbare Rückschlagventil 86 geeignet eingestellt werden. Die Rückschlageigenschaften dienen in diesem Falle dazu, um sicherzustellen, daß keine brennbaren Gase aus dem Saugrohr 17
über den Druckregler 13a in den Motorraum gelangen.

Von der Auswirkung des Unterdrucks $P_u$ im Saugrohr 17 auf
die Einstellung des Ausgangsdrucks $P_1$ her ist das Ausführungsbeispiel gemäß Fig. 4 gleichwirkend mit dem gemäß
Fig. 3.

Fig. 5 zeigt ein weiteres Ausführungsbeispiel eines Druckreglers 13b, wie er alternativ zu den Ausführungsbeispielen
gemäß Fig. 3 und 4 Verwendung finden kann.

Beim Druckregler 13b gemäß Fig. 5 strömt Gas 90 in eine
erste Ventilstufe 91, die aus einem ersten Schließkörper 92
und einem ersten Ventilsitz 93 besteht. Der erste Schließkörper 92 wird mittels einer Stange 94 von einer ersten
Membran 95 betätigt, auf deren entgegengesetzte Seite eine
erste Druckfeder 96 wirkt, deren anderes Ende sich an einer
radialen Wand 97 des Druckreglers 13b abstützt.

Der Raum links von der Membran 95 bis zur radialen Wand 97
wird als erster Regelraum 98 bezeichnet. Vom Raum rechts von
der Membran 95 führt ein Kanal 99 zu einem ersten Zwischenraum 100, der sich links von der radialen Wand 97 erstreckt.
Im ersten Zwischenraum 100 ist ein zweiter Schließkörper 101
axial beweglich, der mit einem zweiten Ventilsitz 102a in
einer weiteren radialen Wand 102 zusammenarbeitet. Links von
der weiteren radialen Wand 102 erstreckt sich ein zweiter
Zwischenraum 103, von dem das Gas 104 aus dem Druckregler 13b abströmen kann.

0155538

Auf seiner linken Seite wird der zweite Zwischenraum 103 von einer zweiten Membran 106 begrenzt, die eine Stange 105 betätigt, an deren von der zweiten Membran 106 abgewandten Ende der zweite Schließkörper 101 angeordnet ist.

Auf ihrer linken Seite greift an die zweite Membran 106 ein Kolben 107 an, dessen wirksame Querschnittsfläche wesentlich kleiner als die Oberfläche der zweiten Membran 106 ist.

Der Raum links von der zweiten Membran 106 wird als zweiter Regelraum 109 bezeichnet und steht über eine Bohrung 108 mit dem Außenraum in Verbindung.

An der Rückseite des Kolbens 107 greift eine zweite Druckfeder 110 an, die zusätzlich mittels einer Einstellschraube 111 axial verschiebbar ist.

Der Raum links von dem Kolben 107 wird als dritter Regelraum 112 bezeichnet.

Der erste Regelraum 98 ist über einen Anschluß 113 mit einer Leitung 114 verbunden, und vom dritten Regelraum 112 führt eine Leitung 114a zur Leitung 114, die dann gemeinsam als Unterdruckleitung 26 zum Saugrohr 17 führen.

Zur Erläuterung der Wirkungsweise des in Fig. 5 dargestellten zweistufigen Druckreglers 13b wird auf die schematisierte Darstellung dieses Druckreglers in Fig. 6 sowie auf die Zeitdiagramme der Fig. 7 und 8 hingewiesen.

Man erkennt, daß das Gas mit einem Eingangsdruck $P_0$ in den Druckregler 13b einströmt und sich nach Passieren des ersten Schließkörpers 92 ein erster Regeldruck $P_1$ einstellt. Für diese Einstellung ist die Auslenkung der ersten Membran 95 verantwortlich, auf deren rechte Seite der Druck $P_1$ und auf deren linke Seite der Unterdruck $P_u$ sowie die Federkraft $F_1$ der ersten Druckfeder 96 wirken.

Nach Durchlaufen des ersten Zwischenraumes 100 unter dem ersten Regeldruck $P_1$ passiert das Gas den zweiten Schließkörper 101 und gelangt in den zweiten Zwischenraum 103, wo es unter dem zweiten Regeldruck bzw. Ausgangsdruck $P_2$ aus dem Druckregler 13b abströmt.

Für die Einstellung des zweiten Regeldrucks $P_2$ ist die Auslenkung der zweiten Membran 106 verantwortlich, auf deren rechte Seite der zweite Regeldruck $P_2$ und auf deren linke Seite der Unterdruck $P_u$, herabgesetzt um den Quotienten der Querschnittsfläche $A_3$ des Kolbens 107 und der Oberfläche $A_2$ der zweiten Membran 106, sowie die Federkraft $F_2$ der zweiten Druckfeder 110 wirken.

Für das Gleichgewicht in der ersten, rechts in Fig. 6 gezeichneten Stufe des Druckreglers 13b gilt:

$$P_1 A_1 + P_u A_1 = F_1 \qquad (1)$$

$$P_1 + P_u = F_1/A_1 \qquad (2)$$

$$P_1 = F_1/A_1 - P_u \qquad (3)$$

In entsprechender Weise gilt für die links in Fig. 6 gezeigte zweite Regelstufe des Druckreglers 13b:

$$P_2 A_2 + P_u A_3 = F_3 \qquad\qquad (4)$$

$$P_2 + P_u A_3 / A_2 = F_3 / A_2 \qquad\qquad (5)$$

$$P_2 = F_3 / A_2 - P_u A_3 / A_2 \qquad\qquad (6)$$

Will man die erste Regelstufe so dimensionieren, daß sich im Leerlauffall bei einem Unterdruck $P_u = 0,6$ bar ein erster Regeldruck $P_1 = 0,3$ bar einstellt, folgt aus (2), daß die Konstante $F_1 / A_1 = 0,9$ sein muß.

Betrachtet man mit dieser Gerätekonstanten den Fall des Schubbetriebs, bei dem der Unterdruck $P_u = 0,9$ bar wird, ergibt sich aus (3) ein erster Regeldruck $P_1 = 0$, was bedeutet, daß im Schubfall die erste Regelstufe den Treibstoffdurchsatz sperrt und damit eine "Schubabschaltung" realisiert.

Im Vollastfall ist der Unterdruck $P_u = 0,05$ bar, und damit wird aus (3) der erste Regeldruck $P_1 = 0,85$ bar.

Die Anreicherung auf 0,85 bar wäre jedoch für den Vollastfall zu hoch. Normalerweise wird ein Verbrennungsmotor nämlich für minimalen Verbrauch mit ca. 20% Luftüberschuß betrieben, d.h. mit dem stöchiometrischen

Luftverhältnis $\lambda$ = 1,2:1. Bei Vollast reichert man zweckmäßigerweise das Gemisch um ca. 20% an, so daß $\lambda$ = 0,95:1 wird. Hierzu muß bei konstanter Luftmenge 20% mehr Treibstoff zugeführt werden. Bei diesem Betriebswert ist die Leistung des Verbrennungsmotors optimal, und eine weitere Anreicherung würde nicht mehr zu einer nennenswerten Leistungserhöhung, sondern nur noch zu einer Erhöhung der Schadstoffe im Abgas führen.

Aus diesem Grunde ist die zweite Regelstufe links in Fig. 6 vorgesehen, für die angenommen sei, daß im Leerlaufbetrieb bei dem bereits erwähnten Unterdruck von $P_u$ = 0,6 bar ein Ausgangsdruck $P_2$ = 0,25 bar gewünscht wird, d.h., der in diesem Falle mittels der ersten Regelstufe eingestellte erste Regeldruck $P_1$ = 0,3 bar muß noch geringfügig vermindert werden.

Aus (5) ergibt sich mit einem angenommenen Wert $A_3/A_2$ = 1/3, daß dann $F_3/A_2$ = 0,45 wird.

Für den Schubbetrieb braucht jetzt keine besondere Berechnung mehr angestellt zu werden, weil aus den oben genannten Gründen bereits die erste Regelstufe im Schubbetrieb die Treibstoffzufuhr unterbricht, so daß schon aus diesem Grunde $P_2$ = 0 sein muß.

Im Vollastbetrieb folgt hingegen aus (6), daß der zweite Regeldruck $P_2$ = 0,43 wird. Dies ist jedoch ein theoretischer Wert, der aufgrund der praktischen Gegebenheiten im Druckregler 13b, vor allem aufgrund der Reibung des Kolbens 107, nicht erreicht wird, es wird sich in der Praxis vielmehr ein Wert $P_2$ = 0,35 bar im Vollastbetrieb einstellen, mit dem beispielsweise die oben genannte Anreicherung um ca. 20% Treibstoff im Vollastbetrieb erzielt werden kann.

Dieser Sachverhalt ist nochmals in den Fig. 7 und 8 als Diagramm dargestellt.

Man erkennt in den Figuren den gestrichelt eingezeichneten atmosphärischen Druck und als Differenz dazu in Fig. 7 den Unterdruck $P_u$ bzw. in Fig. 8 den Überdruck $P_1$ bzw. $P_2$.

Im Zeitintervall $T_1$ erkennt man den Leerlaufbetrieb, in dem ein mittlerer Unterdruck $P_u$ im Saugrohr einen verhältnismäßig niedrigen Überdruck $P_1$ bzw. $P_2$ zur Folge hat, unter dem das Gas in das Saugrohr gelangt bzw. zur Regelung in der ersten Stufe des Druckreglers dient.

Im zweiten Zeitintervall $T_2$ ist hingegen der Schubbetrieb zu erkennen, in dem ein sehr hoher Unterdruck $P_u$ zu einem Absinken des Überdruckes $P_1$ bzw. $P_2$ auf praktisch atmosphärischen Druck führt. Aufgrund der Versperrung ist die Treibstoffzufuhr im Schubbetrieb abgeschaltet.

Im Zeitintervall $T_3$ ist hingegen der Vollastfall zu erkennen, in dem ein sehr geringer Unterdruck $P_u$ zu einem sehr hohen Überdruck $P_1$ bzw. $P_2$ und damit zu einer geeigneten Vollastanreicherung führt.

Fig. 9 zeigt schließlich noch eine Variante eines Druckreglers 13c, der dem Druckregler 13b von Fig. 5 ähnelt. Die

0155538

Darstellung entspricht einen Ausschnitt von Fig. 5 und ist in vergrößertem Maßstab dargestellt.

Man erkennt zunächst als wesentlichen Unterschied eine Stange 120, die mit ihrem einen balligen Ende 121 an der linken Seite der ersten Membran 95 anliegt. Die Stange 120 ist durch eine druckdichte Bohrung 122 der Wand 97 geführt und mit ihrem anderen Ende 123 starr mit einem Ventilkörper 101a des zweiten Ventils des Druckreglers 13c verbunden.

Der Ventilkörper 101a ist axial gleitend in einem Kolbenteil 124 geführt, das seinerseits axial gleitend in einer Sackbohrung 125 in der Wand 97 läuft. Ein Ringflansch des Ventilkörpers 101a ist über eine Druckfeder 126 gegen die Wand 97 abgestützt.

Das zweite Ventil des Druckreglers 13c umfaßt ferner eine Stange 105a, die mit ihrem einen balligen Ende 130 lose an der rechten Seite der zweiten Membran 106 anliegt. In der Nähe des balligen Endes 130 ist fest mit der Stange 105a eine Scheibe 131 verbunden, die über eine Druckfeder 132 am Ventilkörper 101a abgestützt ist. Die Stange 105a läuft axial gleitend durch eine Durchgangsbohrung 133 im Ventilkörper 101a. An ihrem vom balligen Ende 130 abgewandten Ende läuft die Stange 105a in einem Kopf 134 aus, der am Boden einer Gewinde-Sackbohrung 135 im Kolbenteil 124 aufliegt und dort mittels einer Madenschraube 136 axial fixiert ist.

Die Wirkungsweise der Anordnung gemäß Fig. 9 ist wie folgt:

0155538

Im Schubbetrieb des Kraftfahrzeuges gelangt über den Anschluß 113 ein hoher Unterdruck aus dem Saugrohr in den ersten Regelraum 98 und bewegt die erste Membran 95 - wie weiter oben ausführlich geschildert - nach links. Hierdurch wird die Stange 120e bzw. 3 über einen Umfang der ersten Membran 95 bzw. des Ventilkörpers 101a verteilte Stangen nach links verschoben. Die Stange oder Stangen 120 schieben den Ventilkörper 101a gegen die Kraft der Druckfeder 132 nach links, wobei der Ventilkörper 101a auf der Stange 105a gleitet und vom Kolbenteil 124 abhebt. Gleichzeitig wird die Druckfeder 126 etwas entspannt.

Zwar bewegt sich im Schubfall auch die zweite Membran 106 etwas nach links, weil auf ihrer linken Seite ebenfalls der Unterdruck des Saugrohrs wirkt, dies erfolgt jedoch nur über den geringeren Querschnitt des Kolbens 107, so daß die Auslenkung der zweiten Membran 106 geringer ist. Das ballige Ende 130 der Stange 105a bleibt daher in Anlage an der zweiten Membran 106.

Die Geometrie der Anordnung und die Konstanten der Federn 96, 126, 132 sind so gewählt, daß im Schubfall der Ventilkörper 101a auf dem zweiten Ventilsitz 102a zur Anlage kommt und das zweite Ventil mithin schließt. Das zwischen den beiden Ventilen befindliche Gas, das im wesentlichen den ersten Zwischenraum 100 ausfüllt, bleibt daher im Druckregler 13c und gelangt nicht zum Motor.

Erst wenn der Fahrer wieder Gas gibt und der Unterdruck abgebaut wird, kann der Ventilkörper 101a wieder abheben,

0155538

weil sich die erste Membran 95 nach rechts bewegt und sich wieder ein Gleichgewicht zwischen den Druckfedern 126 und 132 einstellen kann.

Auf ihrem Weg nach rechts hebt die erste Membran 95 schließlich vom balligen Ende 121 der Stange 120 ab und die Ruhelage des Ventilkörpers 101a ist damit durch das genannte Gleichgewicht der Druckfedern 126, 132 definiert.

Im Vollastfall wandert die zweite Membran 106 nach rechts aus, jedoch in geringerem Umfang als dies die erste Membran 95 tut, die deshalb von dem balligen Ende 121 der Stange 120 abhebt. Die zweite Membran 106 nimmt die Stange 105a nach rechts mit, wobei unter Zusammendrücken der Druckfedern 126 und 132 der Ventilkörper 101a ebenfalls nach rechts auswandert und das an ihm anliegende Kolbenteil 124 nach rechts in die Sackbohrung 125 drückt.

Auf diese Weise wird der Durchströmquerschnitt des zweiten Ventils erhöht und die Kraftstoffzufuhr in der oben beschriebenen Weise angereichert.

Patentansprüche

1. Einrichtung zum Betreiben eines Kraftfahrzeuges mit gasförmigem Treibstoff, bei der einem Flüssiggastank (10) Gas in der flüssigen Phase entnommen, einem Verdampfer/Druckregler (13) zugeführt und über einen Gasdosierer (15) in ein Saugrohr (17) des Kraftfahrzeuges geleitet wird, dadurch gekennzeichnet, daß das Gas unter Überdruck ($P_3$) in das Saugrohr (17) geleitet wird und daß der Druckregler (13) mit Mitteln versehen ist, die in Abhängigkeit vom Unterdruck ($P_u$) im motorseitigen Saugrohr (17) den Überdruck ($P_3$) gegenläufig zum Unterdruck ($P_u$) einstellen.

2. Einrichtung nach Anspruch 1, dadurch gekennzeichnet, daß bei hohem Unterdruck ($P_u$) von beispielsweise 0,9 bar der Überdruck ($P_3$) auf einen Wert nahe Null von beispielsweise 0 bar eingestellt wird (Schubbetrieb).

3. Einrichtung nach Anspruch 1 oder 2, dadurch gekennzeichnet, daß bei mittlerem Unterdruck ($P_u$) von beispielsweise 0,6 bar der Überdruck ($P_3$) auf einen niedrigen Wert von beispielsweise 0,25 bar eingestellt wird (Leerlaufbetrieb).

4.  Einrichtung nach einem der Ansprüche 1 bis 3, dadurch gekennzeichnet, daß bei niedrigem Unterdruck ($P_u$) von beispielsweise 0,05 bar der Überdruck ($P_3$) auf einen hohen Wert von beispielsweise 0,35 bar eingestellt wird (Vollastbetrieb).

5.  Einrichtung nach einem der Ansprüche 1 bis 4, dadurch gekennzeichnet, daß der Überdruck ($P_3$) in Abhängigkeit von der das Saugrohr (17) durchsetzenden Luftmenge gesteuert und hierzu überlagert in Abhängigkeit von im motorseitigen Saugrohr (17) herrschenden Unterdruck ($P_u$) geregelt wird.

6.  Einrichtung nach Anspruch 5, dadurch gekennzeichnet, daß im Saugrohr (17), zwischen Luftfilter (19) und Vergaser (24), eine Stauklappe (20) angeordnet ist, deren Auslenkung auf den Gasdosierer (15) übertragen wird und den Überdruck ($P_3$) gesteuert einstellt.

7.  Einrichtung nach Anspruch 5 oder 6, dadurch gekennzeichnet, daß an das Saugrohr (17), im Bereich des motorseitigen Krümmers (25), eine Unterdruckleitung (26 angeschlossen ist, die zum Druckregler (13) führt und dort mit einem Regelraum (82; 98) in Verbindung steht, an den eine Membran (65; 95, 106) grenzt, deren Auslenkung den Ausgangsdruck ($P_2$) des Druckreglers (13) bestimmt.

8.  Einrichtung nach Anspruch 7, dadurch gekennzeichnet, daß die Membran (65; 95) ein Ventil (60, 61; 91) für das den Druckregler (13) durchströmende Gas (53, 58; 90) betätigt und daß die Membran (65; 95) auf ihrer einen Seite vom Druck des in den Druckregler (13) strömenden Gases (53, 90) und auf der anderen Seite vom Unterdruck ($P_u$) und einer Vorspannkraft ($F_1$, $F_2$) beaufschlagt ist.

9. Einrichtung nach Anspruch 8, dadurch gekennzeichnet, daß der Unterdruck ($P_u$) untersetzt auf die Membran (65) wirkt.

10. Einrichtung nach Anspruch 8, dadurch gekennzeichnet, daß hinter einer aus einer ersten Membran (95) und einem ersten Ventil (91) gebildeten ersten Stufe des Druckreglers (13b) eine zweite, aus einer zweiten Membran (106) und einem zweiten Ventil (101, 101a, 102a) gebildete zweite Stufe vorgesehen ist, wobei der Unterdruck ($P_u$) untersetzt auf die zweite Membran (106) wirkt.

11. Einrichtung nach Anspruch 10, dadurch gekennzeichnet, daß die erste Stufe (91, 95) mit der zweiten Stufe (101a, 102a, 106) zusammenwirkt, derart, daß bei Schließen des ersten Ventils (91) das zweite Ventil (101a, 102a) ebenfalls geschlossen wird.

12. Einrichtung nach Anspruch 11, dadurch gekennzeichnet, daß ein Ventilkörper (101a) des zweiten Ventils (101a, 102a) mit mindestens einer Stange (120) versehen ist, die an der ersten Membran (95) in deren Öffnungsrichtung lose anliegt.

13. Einrichtung nach Anspruch 11, dadurch gekennzeichnet, daß der Ventilkörper (101a) und die erste Membran (95) rotationssymmetrisch sind und daß drei Stangen (120) über einen Umfang verteilt vorgesehen sind.

14. Einrichtung nach einem der Ansprüche 11 bis 13, dadurch gekennzeichnet, daß das zweite Ventil eine lose an der zweiten Membran (106) in deren Schließrichtung anliegende weitere Stange (105a) aufweist, die gleitend im Ventilkörper (101a) geführt und an diesem über eine Druckfeder (132) abgestützt ist, daß der Ventilkörper (101a) seinerseits in einem Kolbenteil (124) gleitend geführt ist, an dem die weitere Stange (105a) befestigt ist und der sich über eine weitere Druckfeder (126) an einer Wand (97) des Gehäuses des Druckreglers (13c) abstützt.

15. Einrichtung nach einem der Ansprüche 9 bis 14, dadurch gekennzeichnet, daß zum Untersetzen der Unterdruck ($P_u$) auf eine Teilfläche der Membran (65; 106) wirkt.

16. Einrichtung nach einem der Ansprüche 9 bis 14, dadurch gekennzeichnet, daß zum Untersetzen der Unterdruck ($P_u$) durch eine Öffnung (86) im Gehäuse (51) des Druckreglers (13a) geschwächt wird.

0155538

Fig. 1

P 46 35 E

0155538

Fig. 2

P 46 35 E1

Fig. 3

0155538

Fig. 4

P 46 35 EP

0155538

Fig. 5

P 4635 EP

Fig.6

Fig.7

Fig.8

Fig. 9

# EUROPÄISCHER RECHERCHENBERICHT

**0155538**

Europäisches Patentamt

Nummer der Anmeldung

EP 85 10 2002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 084 175 (BOSCH) * Zusammenfassung; Seite 1, letzter Abschnitt; Seite 2, erster und letzter Abschnitt; Seite 3, erster Abschnitt; Seite 4, letzter Abschnitt; Seite 5, Zeilen 1-18; Seite 7; Seite 8, Zeilen 6-8 und die drei letzten Zeilen; Seiten 9-10 * | 1,5-9 | F 02 M 21/02 |
| A | | 16 | |
| | --- | | |
| X | DE-A-2 131 804 (MESSER GRIESHEIM) * Seite 1, erster Abschnitt; Seite 4; Seite 5, Abschnitte 1-5; Seite 8, erster Abschnitt * | 1,5,7-9,15 | |
| A | | 16 | RECHERCHIERTE SACHGEBIETE (Int. Cl.4) |
| | --- | | F 02 M |
| X | US-A-3 960 126 (SHINODA) * Zusammenfassung; Spalte 2, Zeilen 16-57; Spalte 3, Zeilen 13-26, 55-68; Spalte 4, Zeilen 55-59; Spalte 5, Zeilen 39-59; Spalte 6, Zeile 14 - Spalte 8, Zeile 24; Spalte 8, Zeilen 61-68; Spalte 9, Zeilen 1-62 * | 1,3,4,5,7,8 | F 02 D |
| | ---     -/- | | |

Der vorliegende Recherchenbericht wurde für alle Patentansprüche erstellt.

| Recherchenort DEN HAAG | Abschlußdatum der Recherche 03-06-1985 | Prüfer JORIS J.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

**EUROPÄISCHER RECHERCHENBERICHT**

**0155538**

Nummer der Anmeldung

EP 85 10 2002

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 064 373 (EMCO WHEATON INT. LTD.) <br><br> * Seite 2, dritter Abschnitt - Seite 4, Zeile 2; Seite 5, Zeilen 11-25; Seite 6, Zeile 16 - Seite 7, Zeile 10; Seite 11, Zeilen 1-8; Seite 14, letzter Abschnitt - Seite 15, erster Abschnitt; Figuren 2,4 * <br><br> --- | 1,2,5, 7-10, 15 | |
| X | EP-A-0 084 219 (SOLEX U.K.) <br><br> * Zusammenfassung; Seite 6, Zeile 11 - Seite 8, Zeile 12; Seite 15, Zeile 10 - Seite 16, Zeile 17; Seite 16, Zeile 25 - Seite 18, Zeile 19; Seite 19, Zeile 7 - Seite 20, Zeile 2 * <br><br> --- | 1,3-5, 7,8 | |
| X | WO-A-8 202 926 (HALLBERG) <br><br> * Zusammenfassung; Seite 3, Zeilen 9-13, 27-31; Seite 6, Zeilen 26-29; Seite 10, Zeilen 20-29; Seite 11, Zeilen 1-4, 20-35; Seite 12, Zeilen 1-5 und 36; Seite 13, Zeilen 1-4; Seite 16, Zeile 13 - Seite 17, Zeile 17; Seite 17, Zeilen 30-35; Seite 18, Zeilen 1-8 * <br><br> ----- | 1,5,7-10 | **RECHERCHIERTE SACHGEBIETE (Int. Cl.4)** |

Der vorliegende Recherchenbericht wurde für alle Patentansprüche erstellt.

| Recherchenort <br> DEN HAAG | Abschlußdatum der Recherche <br> 03-06-1985 | Prüfer <br> JORIS J.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82